Europäisches Patentamt

European Patent Office

Office européen des brevets

(11) Publication number: **0 249 062 B1**

# EUROPEAN PATENT SPECIFICATION

(45) Date of publication of patent specification: **19.08.92**    (51) Int. Cl.⁵: **G11B 5/54**, G11B 5/40

(21) Application number: **87107233.6**

(22) Date of filing: **19.05.87**

(54) Disk drive actuator velocity limiting circuit.

(30) Priority: **12.06.86 US 873740**

(43) Date of publication of application:
**16.12.87 Bulletin  87/51**

(45) Publication of the grant of the patent:
**19.08.92 Bulletin  92/34**

(84) Designated Contracting States:
**DE FR GB**

(56) References cited:
DE-A- 904 560
US-A- 4 237 501
US-A- 4 371 903

**PATENT ABSTRACTS OF JAPAN vol.9, no. 20
(P-330) (1743), 26th January 1985; & JP-A-59
165 269 (FUJITSU) 18.09.1984**

**TAB PROFESSIONAL AND REFERENCE
BOOKS Division of TAB BOOKS Inc., P.O.
BOX 40, Blue Ridge Summit, PA17214, pages
258,259; S. GIBILISCO. "Encyclopedia of
Electronics"**

(73) Proprietor: **International Business Machines
Corporation
Old Orchard Road
Armonk, N.Y. 10504(US)**

(72) Inventor: **Stich, Michael Charles
2724 NW 9 Avenue
Rochester Minnesota 55901(US)**
Inventor: **Glaser, Thomas William
R.R. 2, Box 312
Rochester Minnesota 55902(US)**
Inventor: **Axmear, Frederick Eugene
Route 2, Box 21
Decorah Iowa 52101(US)**

(74) Representative: **Vekemans, André
Compagnie IBM France Département de Pro-
priété Intellectuelle
F-06610 La Gaude(FR)**

EP 0 249 062 B1

## Description

The invention pertains to rotating memory devices and more particularly to an actuator mechanism control circuit that precludes uncontrolled actuator velocity that exceeds the safe speed with which the actuator can safely engage the travel limiting crash stop.

In rotating disk storage devices having data on concentric tracks read by a transducer driven by a voice coil motor, such as magnetic disk drives, the transducer heads must be returned to the landing zone before the disk stops spinning in order to insure the integrity of the data. In the past this has been done by a spring or requiring that a stop motor command be issued before power is shut off. The spring had the disadvantage of requiring extra current in the actuator to compensate for the spring bias during normal operation and being feasible only for a rotary actuator. The command approach includes the risk that the operator may forget to issue the command. It is preferable to be able to merely deactivate the power switch when it is desired to power down the system. This presents the problem of how to get the actuator back to the landing zone in a controlled fashion so the the disk rotation may be stopped.

It is easy to convert the disk rotational energy into electrical energy to move the actuator. This is described, e.g., in US-A-4,371,903. Diode rectifiers can be switched in to provide a voltage source to power some simple components. Any current that the motor supplies helps slow the motor more quickly. This is necessary since the amount of time the heads are dragging on the disk during coast down is important to minimize wear. However, as the motor slows, the voltage supplied also reduces. Thus any circuit that uses this principle must be able to work over a wide range of conditions. Further, a constant force supplied to retract the actuator can result in damage to the heads. At each end of allowable head travel is a crash stop. The file is designed such that, during normal operation, the transducer heads will never exceed a critical velocity above which the actuator assembly would be damaged or destroyed if it were to engage the crash stop. The retract circuit must supply enough current to overcome the bias and friction forces in the mechanical system. However, if the file is turned off when traveling at its maximum speed, the retract circuit with a constant force or voltage will add far too much velocity to the transducer heads. What is required is a constant velocity control, but one that will operate with wide tolerance in supply voltage encountered when the normal supplies are turned off.

In normal operation, disk drive performance moving from one track to an address on another track is dependent on two factors; the speed with which the head can be moved from one track to the other track and settled in alignment with the track centerline (access time) and the latency or time required for the addressed ID field to come under the transducer gap. Latency is a function of the spindle rotational speed and is an average of about one half a revolution. This changes only with the spindle speed. The access time may be shortened by increasing the velocity of the actuator when moving to the target track.

As mentioned above the actuator speed is often constrained to a lower speed than could otherwise be utilized by requiring that the velocity not exceed the speed that could be tolerated if the actuator were to hit the crash stop.

The invention is represented by a circuit as defined in claim 1.

The control circuit of the present invention has antiparallel diode means connected in parallel with the actuator voice coil during power interruption or error condition operating sequences. The purpose of the diodes is to limit the actuator velocity in this mode. The actuator speed during this mode of operation is determined by the number of diodes connected in series in the parallel path and to a lesser extent, the value of the current source. The allowed velocity is sized to be somewhat below the allowable value of velocity for safe crash stop engagement. If the velocity is in excess of the control value, the back EMF of the actuator coil induces a current flow in the diodes and the actuator velocity is thereby reduced.

Thus, if the actuator is traveling at some velocity when power is interrupted, the actuator coil current will promptly decay to a level that produces a steady state velocity at which the crash stop may be safely engaged. The circuit may also be invoked as a safety mechanism when the system detects an error condition that will or may result in actuator motion at an uncontrolled velocity. The control circuit can be invoked directly by a logic line from the processor or by some event that is indicative that an error condition has or may have occurred. For example, a device may have a time out circuit that is periodically refreshed during normal error free operation. If such circuit times out, the control circuit is activated.

With protection of the transducer heads and disks from either hardware failure or power interruption, it is possible to utilize velocities during normal operation that exceed the velocity for which the crash stops are designed. This enables full realization of the access time improvement that can be realized by using the maximum velocity obtainable during operation.

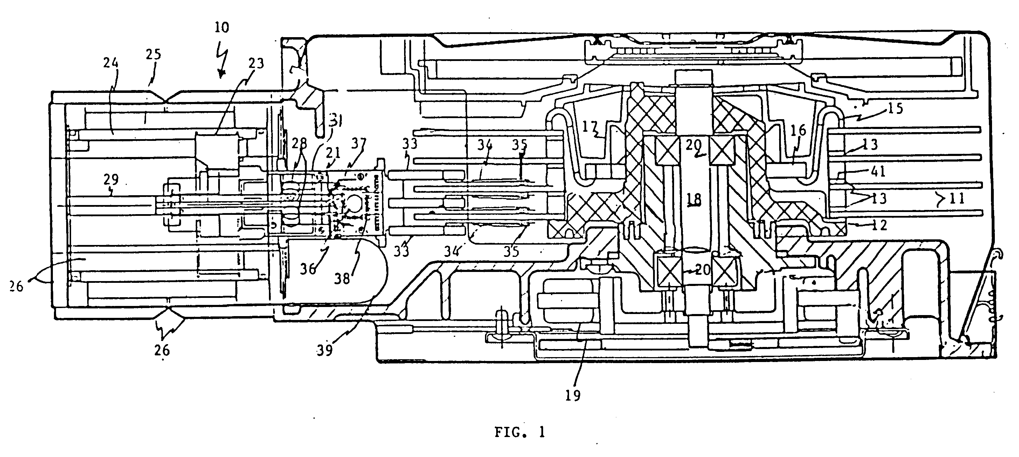

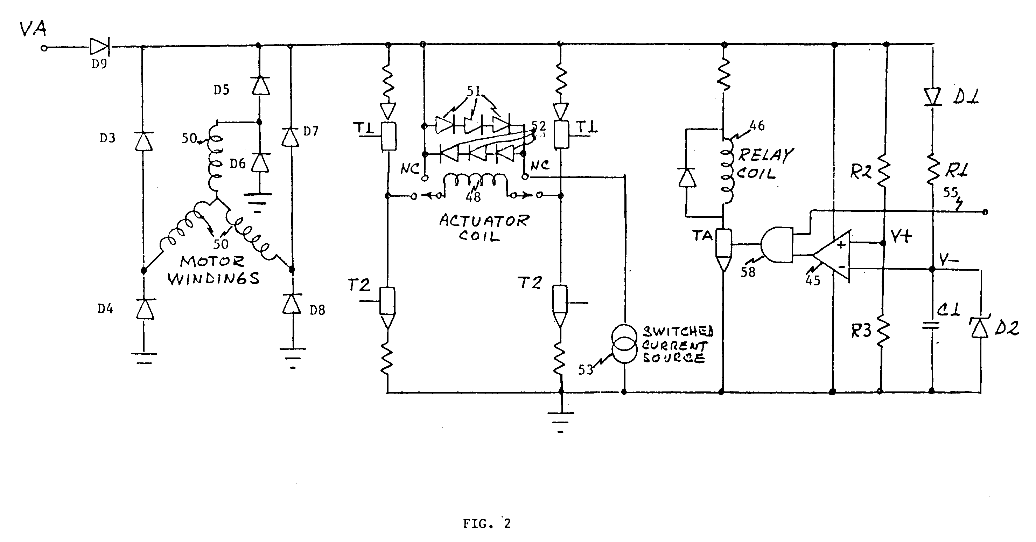

Fig 1 is a partial vertical section view of a typical hard disk drive including the disk, actuator and motor assemblies. Fig 2 is a circuit diagram showing the control circuits that implement the present invention.

Fig 1 illustrates a typical magnetic disk drive wherein the actuator assembly 10 positions transducers 35 in alignment with addressed tracks on the lower two disks 11 of a four disk spindle assembly. The hub 12 has four disks mounted thereon which are separated by spacers 13. The disk stack is compressively retained on hub 12 by a resilient clamping element 15, collar 16 and shrink ring 17 that is secured against the outer surface of the hub 12 by a shrink fit after assembly when the ring is heated and expanded. The hub/disk assembly is mounted on spindle shaft 18 such that the disks 11, hub 12, spindle shaft 18 and the rotor of the spindle drive motor 19 rotate in unison, supported by bearings 20.

The linear actuator carriage 21 is driven by a voice coil wound on bobbin 23 to effect radial inward and outward motion. The voice coil reciprocates in the working air gap 24 in which a magnetic field is established by the radially polarized permanent magnets 25 and the pole pieces 26. Actuator carriage 21 is guided along the radial path by three pairs of rollers 28 (one pair of which is shown) that engage a rod or way 29 at each lateral side of the actuator carriage. Two pairs of longitudinally spaced rollers are at one side and one pair at the other lateral side is disposed longitudinally intermediate the other two pairs. One roller of the single pair is spring biased to take up any play or slack in the mechanical system between the carriage/roller assembly and the ways or rails 29.

The carriage assembly includes the body 31 which carries rollers 28; the voice coil and transducer suspension assemblies wherein arm 33 has attached thereto a resilient suspension 34 that carries transducer head 35. Each of the transducer coils is attached to the arm electronics module 36 on the flexible conductor 37 at the solder terminations 38. The arm electronics module 36 is connected to the remainder of the disk drive circuitry by conductors on the flat cable portion 39. There is also an internal air circulation within the head disk assembly which is induced by the impeller action of the hub 12 and the rotating disks 11. Air flows radially outward from the hub interior through aperatures 41 an the spacers 13.

The circuit of Fig 2 is directed to a system wherein the windings of a DC spindle drive motor are switched, when the power is interrupted, to use the kinetic energy of the rotating spindle assembly to drive the actuator to the home position or landing area. The motor windings, which previously rotated the spindle assembly, now function as a generator producing a DC current supplied to the actuator.

Fig 2 illustrates a method of sensing a power interruption and directing the supply voltage, which is now the output of the motor functioning as a generator, through the actuator coil to retract the heads while the spindle motor is coasting to a stopped condition. A comparator 45 senses a voltage V+ established by the divider circuit of resistances R2 and R3 and compares this voltage with a reference, V-established by diodes D1 and D2, resistance R1 and capicator C1. The choice of resistances R2 and R3 is such that V+ is higher than V- during normal operation. During normal operating conditions comparator 45 turns on transistor TA, which in turn energizes the relay coil 46 to hold the relay contacts, appearing at the ends of actuator coil 48, in the position illustrated. In this position, the actuator coil 48 receives current from the darlington transistors T1 and T2.

When power is interrupted, as VA diminishes V+ will fall below V- causing comparator 45 and transistor TA to de-energize relay coil 46. The relay contacts return to the normally closed (NC) position, allowing current from the power supply to flow through the actuator coil 48. The direction of current flow is such that the actuator is moved in the retract direction. With the power no longer supplied by the normal source VA, the power supply to the actuator is derived from the motor windings 50 which is rectified by the diodes D3 through D8. At this time the normal power source VA is isolated from the illustrated circuit by diode D9.

During power interruption the actuator coil 48 is in series with a switched current source 53 that is operative only when relay coil 46 is de-energized. Connected in parallel with actuator coil 48 are back to back diode means 51 and 52. The diode means 51 and 52 limit the voltage across actuator coil 48 such that if the actuator should exceed a safe speed, the back EMF of the coil causes current to flow in the diodes and reduce actuator velocity. Eventually a steady state is reached. This speed is determined by the number of diodes in series at the diode means 51 or 52 and to a lesser extent, the value of the switched current source 53. Catch diodes from each side of the coil to the supply and ground can be added to minimize the wear of arcing during the switch over. Thus even if the actuator is traveling at some velocity when the power is shut off, it will always decay to the steady state velocity which is designed to be safe for hitting the crash stop.

Using a signal line 55 and an AND circuit 58, the circuit of Fig 2 may also be used in a safety mode to safely terminate operation when an error condition might result in the uncontrolled motion of the actuator. Operation of the circuit in the safety mode is exactly the same except that that power supply is constant since it is not turned off. However, the assumption is that some part of the control system has failed, so that the actuator can not be positioned properly and is therefore at risk of hitting the crash stop in an uncontrolled fashion. The circuit is activated by a logic line 55 that can be driven from a variety of sources. For example it could be controlled by a time out circuit that must be refreshed by the actuator control processor periodically. If the processor fails, the time out occurs, the retract circuit is activated and the heads are returned to the landing zone. It could also be controlled directly by the processor so that if the processor detected an error in the power drive circuitry or other external circuitry, it could activate the retract circuit. Thus the heads and disks are protected from failure of any of the hardware in the control loop. This would allow safe, normal operation above the velocity limit that the crash stops are designed for, improving access time performance. If a failure occurred at a high velocity, activating the circuit would reduce the velocity before it hit the crash stop.

While the invention has been particularly shown and described with respect to a preferred embodiment thereof, it will be understood that various changes in form and details may be made therein without departing from the spirit and scope of the invention.

## Claims

1. A control circuit for a rotating data storage device wherein data is stored on parallel tracks and a transducer is positioned over a data track by an actuator coil (48) driven actuator and the disk is driven by a DC motor, further comprises:
   sensing means (45) for identifying a power interruption or an error condition,
   switching means (46) being operative when said sensing means identifies that power to said device has been interrupted, to switch said actuator coil from the normal driver means (T1, T2) to the output of the stator (50) windings of said DC motor, the rectified output having a polarity which drives the actuator to the home position characterized in that it further comprises:
      means (51, 52) for limiting the voltage across the actuator coil in order to limit the velocity of said actuator when power has been interrupted.

2. The control circuit for a rotating data storage device of claim 1 characterized in that said regulating means comprises
   a pair of antiparallel diode means (51), each respectively connected in parallel with said actuator coil when said actuator coil is connected to receive current from said DC motor stator windings.

3. The control circuit for a rotating data storage device of claim 2 characterized in that said pair of antiparallel diode means each comprises a plurality of series connected diodes.

4. The control circuit for a rotating data storage device of claim 3 characterized in that it further comprises
   signal means (55) for operating said switch means to switch the power supply to said actuator coil from the normal driver means (T1, T2) to the output of the stator windings (50) irrespective of the status of said sensing means (45), and
   logic means (58) for operating said switch means in response to either a power interruption indicated by said sensing means or a condition to which said signal means responds.

5. The control circuit for a rotating data storage device of claim 4 characterized in that said normal power source connected to supply said actuator is isolated by diode (D9) means from said current generated by said DC motor stator windings.

## Patentansprüche

1. Steuerschaltung für eine rotierende Datenspeichereinrichtung, bei welcher Daten in parallelen Spuren gespeichert werden und ein Wandler mittels eines von einer Stellerspule (48) angetriebenen Stellers über einer Datenspur eingestellt wird und die Platte von einem Gleichstrommotor angetrieben wird, die ferner folgendes aufweist:
   ein Abfühlmittl (45) zum Identifizieren einer Versorgungsunterbrechung oder eines Fehlerzustands,
   Schaltermittel (46), die arbeiten, wenn das Abfühlmittel identifiziert, daß die Versorgung für die Einrichtung unterbrochen wurde, um die Stellerspule von den gewöhnlichen Treibermitteln (T1, T2) an den Ausgang der Stator (50)-Wicklungen des Gleichstrommotors zu schalten, wobei der gleichgerichtete Ausgang eine Polarität aufweist, welche den Steller zu der Ausgangslage treibt, dadurch gekennzeichnet, daß sie ferner folgendes aufweist:
   ein Mittel (51, 52) zum Begrenzen der Spannung über der Stellerspule, um die Geschwindigkeit des Stellers zu begrenzen, wenn die Versorgung unterbrochen wurde.

**2.** Steuerschaltung für eine rotierende Datenspeichereinrichtung nach Anspruch 1, dadurch gekennzeichnet, daß das Reguliermittel folgendes aufweist:

ein Paar antiparalleler Diodenmittel (51), wobei jedes jeweils parallel zu der Stellerspule geschaltet ist, wenn die Stellerspule geschaltet ist, um einen Strom aus den Statorwicklungen des Gleichstrommotors zu empfangen.

**3.** Steuerschaltung für eine rotierende Datenspeichereinrichtung nach Anspruch 2, dadurch gekennzeichnet, daß jedes paar antiparalleler Diodenmittel eine Mehrzahl von in Reihe geschalteten Dioden aufweist.

**4.** Steuerschaltung für eine rotierende Datenspeichereinrichtung nach Anspruch 3, dadurch gekennzeichnet, daß sie ferner folgendes aufweist:

ein Signalmittel (55) zum Betätigen der Schaltermittel, um die Energieversorgung für die Stellerspule von den gewöhnlichen Treibermitteln (T1, T2) unabhängig von dem Status des Abfühlmittels (45) an den Ausgang der Statorwicklungen (50) zu schalten und

logische Mittel (58) zum Betätigen der Schaltermittel entweder entsprechend einer von dem Abfühlmittel angezeigten Versorgungsunterbrechung oder einem Zustand, auf welchen das Signalmittel (55) anspricht.

**5.** Steuerschaltung für eine rotierende Datenspeichereinrichtung nach Anspruch 4, dadurch gekennzeichnet, daß die gewöhnliche Energiequelle, die ansgeschaltet ist, um den Steller zu versorgen, durch ein Dioden (D9)-Mittel von dem Strom isoliert ist, der von den Statorwicklungen des Gleichstrommotors erzeugt wird.

**Revendications**

**1.** Circuit de commande d'un dispositif rotatif de mémoire de données dans lequel des données sont stockées sur des pistes parallèles et un transducteur est positionné sur une piste de données par un actionneur entraîné par une bobine d'actionneur (48) et le disque est entraîné par un moteur à courant continu, comprenant en outre :

des moyens de détection (45) pour identifier une interruption d'alimentation en énergie ou une situation d'erreur, et

des moyens de commutation (46) agissant, lorsque lesdits moyens de détection identifient que l'alimentation dudit dispositif a été interrompue, de manière à commuter ladite bobine d'actionneur des moyens normaux d'excitation (T1,T2) à la sortie des enroulements de stator (50) dudit moteur à courant continu, la sortie redressée ayant une polarité qui ramène l'actionneur à la position de repos, caractérisé en ce qu'il comprend en outre :

des moyens (51,52) de limitation de la tension appliquée à la bobine d'actionneur, afin de limiter la vitesse dudit actionneur en cas d'interruption de l'alimentation en énergie.

**2.** Circuit de commande d'un dispositif rotatif de mémoire de données suivant la revendication 1, caractérisé en ce que lesdits moyens de régulation comprennent :

deux ensembles de diodes en opposition (51), chaque ensemble étant respectivement connecté en parallèle avec ladite bobine d'actionneur lorsque ladite bobine d'actionneur est connectée de manière à recevoir le courant en provenance desdits enroulements de stator du moteur à courant continu.

**3.** Circuit de commande d'un dispositif rotatif de mémoire de données suivant la revendication 2, caractérisé en ce que lesdits deux ensembles de diodes en opposition comprennent chacun une pluralité de diodes connectées en série.

**4.** Circuit de commande d'un dispositif rotatif de mémoire de données suivant la revendication 3, caractérisé en ce qu'il comprend :

des moyens de fourniture de signal (55) pour actionner lesdits moyens de commutation afin de commuter l'alimentation en énergie de ladite bobine d'actionneur des moyens d'excitation normaux (T1,T2) à la sortie des enroulements de stator (50) indépendamment de l'état desdits moyens de détection (45), et

des moyens logiques (58) pour actionner lesdits moyens de commutation en réponse à une interruption d'alimentation, indiquée par lesdits moyens de détection, ou à une situation à laquelle répondent lesdits moyens de fourniture de signal.

**5.** Circuit de commande d'un dispositif rotatif de mémoire de données suivant la revendication 4, caractérisé en ce que ladite source normale d'énergie, connectée pour alimenter ledit actionneur, est isolée par une diode (D9) dudit courant engendré par lesdits enroulements de stator du moteur à courant continu.

FIG. 1

EP 0 249 062 B1

FIG. 2

EP 0 249 062 B1